# EUROPEAN PATENT APPLICATION

(11) **EP 4 797 078 A1**
(43) Date of publication of application: **26.08.2026**
(21) Application number: 24884320.3
(22) Date of filing: 25.09.2024
(51) Int. Cl.: G06F 8/61

(54) **METHOD AND APPARATUS FOR OFFLOADING MICROCODE PROGRAM, AND RELATED PRODUCT**

(30) Priority: 31.10.2023 CN 202311440063
(71) Applicant: HUAWEI TECHNOLOGIES CO., LTD., Shenzhen 518129 (CN)
(72) Inventor: YAO, Xin, Shenzhen, Guangdong 518129 (CN); JIANG, Jianyu, Shenzhen, Guangdong 518129 (CN); ZHU, Wenbin, Qingdao, Shandong 266237 (CN); SHEN, Zhaoyan, Qingdao, Shandong 266237 (CN); CHEN, Renhai, Shenzhen, Guangdong 518129 (CN); ZHANG, Gong, Shenzhen, Guangdong 518129 (CN)
(74) Representative: Goddar, Heinz J.
(86) International application number: PCT/CN2024/121160
(87) International publication number: WO 2025/092314

(57) **Abstract**

A microcode program offloading method and apparatus, and a related product are disclosed, belonging to the field of computer technologies. An embodiment of this application provides a first static microcode program in firmware of a DPU, and the first static microcode program is used to dynamically offload any microcode program of a host to the DPU. An association relationship between the first static microcode program and first indication information is extended. Correspondingly, the host is configured with a corresponding user-oriented first interface, and a user may trigger offloading of a microcode program through the first interface. Based on this, the host can dynamically offload a microcode program to the DPU during operation of the DPU only by including the first indication information and the to-be-offloaded microcode program in a packet. Therefore, in embodiments of this application, a microcode program can be dynamically offloaded to a DPU during operation of the DPU, so that a microcode program can be dynamically modified during operation of the DPU without interrupting a service corresponding to another microcode program.

## Description

This application claims priority to Chinese Patent Application No. 202311440063.4, filed on October 31, 2023 and entitled "MICROCODE PROGRAM OFFLOADING METHOD AND APPARATUS, AND RELATED PRODUCT", which is incorporated herein by reference in its entirety.

### TECHNICAL FIELD

Embodiments of this application relate to the field of computer technologies, and in particular, to a microcode program offloading method and apparatus, and a related product.

### BACKGROUND

To reduce data processing pressure of a central processing unit (central processing unit, CPU) of a host, the host may be connected to a data processing unit (data processing unit, DPU), to offload (offload) some data-centered microcode programs of the host to the DPU.

In a related technology, when the DPU is powered on, all microcode programs to be offloaded to the DPU are compiled and packaged into firmware (firmware), and the firmware is burnt into the DPU, so that the host subsequently calls the microcode programs on the DPU. If a microcode program needs to be modified, after the microcode program is modified, all microcode programs are recompiled and packaged into firmware, and the firmware is re-burnt into the DPU when the DPU is powered on. Consequently, services are interrupted for a long time during service upgrade.

### SUMMARY

Embodiments of this application provide a microcode program offloading method and apparatus, and a computer storage medium, so that a microcode program can be dynamically offloaded to a DPU during operation of the DPU, and a microcode program can be dynamically modified during operation of the DPU without interrupting a service corresponding to another microcode program. The technical solutions are as follows.

According to a first aspect, a microcode program offloading method is provided. The method is applied to a data processing unit DPU, and firmware of the DPU includes a first static microcode program. The method includes: The DPU receives a first packet from a host, where the first packet carries first indication information, microcode data, and a logical address of the microcode data in the DPU, and the microcode data is data obtained by compiling a program body of a to-be-offloaded target microcode program; and the DPU executes the first static microcode program in response to the first indication information, where the first static microcode program is used to: translate the logical address into a physical address, and offload the microcode data to a storage location corresponding to the physical address.

This embodiment of this application provides the first static microcode program deployed in the firmware of the DPU, and the first static microcode program is used to dynamically offload any microcode program of the host to the DPU. In addition, an association relationship between the first static microcode program and the first indication information is extended. Based on this, the host can dynamically offload the microcode program to the DPU during operation of the DPU only by including the first indication information and the to-be-offloaded microcode program in a packet. Therefore, in embodiments of this application, the microcode program can be dynamically offloaded to the DPU during operation of the DPU, so that a microcode program can be dynamically modified during operation of the DPU without interrupting a service corresponding to another microcode program.

Based on the method provided in the first aspect, in a possible implementation, the DPU stores the association relationship between the first indication information and the first static microcode program.

The association relationship between the first indication information and the first static microcode program is pre-stored, so that when receiving the packet including the first indication information, the DPU can quickly determine that the first static microcode program needs to be executed currently, thereby improving execution efficiency of the DPU.

Based on the method provided in the first aspect, in a possible implementation, the DPU stores an address translation rule, and the address translation rule indicates a mapping relationship between a logical address and a physical address. The first static microcode program is used to translate the logical address into the physical address according to the address translation rule.

The address translation rule is locally stored, so that execution efficiency of the first static microcode program can be improved.

Based on the method provided in the first aspect, in a possible implementation, that the DPU receives the first packet from the host includes: The DPU receives the first packet from the host through a serial computer bus or a network port.

The method provided in embodiments of this application is applicable to both a local host and a remote host, thereby improving application flexibility of embodiments of this application.

Based on the method provided in the first aspect, in a possible implementation, the firmware of the DPU includes a second static microcode program; and after the DPU executes the first static microcode program, the method further includes: The DPU receives a second packet from the host, where the second packet carries second indication information, a parameter required for executing the target microcode program, and the logical address; the DPU executes the second static microcode program in response to the second indication information, where the second static microcode program is used to: obtain the microcode data based on the logical address, and determine an execution result based on the microcode data and the parameter; and the DPU returns the execution result to the host.

To avoid a case in which a quantity of microcode programs that can be offloaded to the DPU is limited due to a space limitation of a register of the DPU, this embodiment of this application further provides the second static microcode program deployed in the firmware of the DPU. The second static microcode program is used to call any microcode program on the DPU. In addition, an association relationship between the second static microcode program and the second indication information is extended in a microcode table. Based on this, the host can call any microcode program on the DPU only by including the second indication information and related information of the to-be-called microcode program in the packet, and does not need to store a correspondence between each microcode program and indication information in the microcode table of the register of the DPU.

Based on the method provided in the first aspect, in a possible implementation, the DPU stores the association relationship between the second indication information and the second static microcode program.

The association relationship between the second indication information and the second static microcode program is pre-stored, so that when receiving the packet including the second indication information, the DPU can quickly determine that the second static microcode program needs to be executed currently, thereby improving execution efficiency of the DPU.

Based on the method provided in the first aspect, in a possible implementation, the firmware of the DPU includes a third static microcode program. The method further includes: The DPU receives a third packet from the host, where the third packet carries third indication information and a user identifier of the target microcode program; the DPU executes the third static microcode program in response to the third indication information, where the third static microcode program is used to register a function identifier based on the user identifier of the target microcode program; and the DPU returns the function identifier to the host, where the second packet further carries the function identifier, and the second static microcode program is used to: generate a function pointer based on the function identifier and the logical address, and obtain the microcode data based on the function pointer.

This embodiment of this application further provides the third static microcode program deployed in the firmware of the DPU. The third static microcode program is used to register a microcode program on the host. In addition, an association relationship between the third static microcode program and the third indication information is extended in the microcode table. Based on this, the host can register a microcode program on the DPU only by including the third indication information and related information of the to-be-registered microcode program in the packet.

Based on the method provided in the first aspect, in a possible implementation, the DPU stores the association relationship between the third indication information and the third static microcode program.

The association relationship between the third indication information and the third static microcode program is pre-stored, so that when receiving the packet including the third indication information, the DPU can quickly determine that the third static microcode program needs to be executed currently, thereby improving execution efficiency of the DPU.

According to a second aspect, a microcode program offloading method is provided. The method is applied to a host, the host is connected to a data processing unit DPU, the host includes a first interface, and the method includes:

A host obtains an offloading request triggered by a user through a first interface, where the offloading request carries a user identifier of a target microcode program and a program body of the target microcode program;
the host obtains, based on the user identifier of the target microcode program, a logical address allocated to the target microcode program; and
a host sends a first packet to a DPU, where the first packet carries first indication information, microcode data, and the logical address, and the microcode data is data obtained by compiling the program body of the target microcode program.

The first indication information indicates the DPU to execute a first static microcode program, and the first static microcode program is used to: translate the logical address into a physical address, and offload the microcode data to a storage location corresponding to the physical address.

This embodiment of this application provides the first static microcode program deployed in firmware of the DPU, and the first static microcode program is used to dynamically offload any microcode program of the host to the DPU. In addition, an association relationship between the first static microcode program and the first indication information is extended in a microcode table. Correspondingly, the host is configured with the corresponding user-oriented first interface, and the user may trigger offloading of the microcode program through the first interface. Based on this, the host can dynamically offload the microcode program to the DPU during operation of the DPU only by including the first indication information and the to-be-offloaded microcode program in a packet.

Based on the method provided in the second aspect, in a possible implementation, the host further includes a second interface; and the method further includes: The host obtains a calling request triggered by the user through the second interface, where the calling request carries the user identifier of the target microcode program and a parameter required for executing the target microcode program; the host determines, based on the user identifier of the target microcode program, the logical address allocated to the target microcode program; the host sends a second packet to the DPU, where the second packet carries second indication information, the parameter, and the logical address, the second indication information indicates the DPU to execute a second static microcode program, and the second static microcode program is used to: obtain the microcode data based on the logical address and determine an execution result based on the microcode data and the parameter; and the host receives the execution result returned by the DPU.

This embodiment of this application further provides the second static microcode program deployed in the firmware of the DPU 20, and the second static microcode program is used to call a microcode program on the DPU 20. In addition, an association relationship between the second static microcode program and the second indication information is extended in the microcode table. Correspondingly, the host is configured with a corresponding user-oriented second interface, and the user may trigger calling of the microcode program through the second interface. Based on this, the host can call the microcode program on the DPU 20 only by including the second indication information and related information of the to-be-called microcode program in the packet. In this manner, it is unnecessary to store, in the microcode table of the DPU 20, indication information corresponding to each microcode program in all offloaded microcode programs, thereby avoiding a case in which a quantity of microcode programs that can be offloaded to the DPU 20 is limited due to a space limitation of a register of the DPU 20.

Based on the method provided in the second aspect, in a possible implementation, the host further includes a third interface; and the method further includes: The host obtains a registration request triggered by the user through the third interface, where the registration request carries the user identifier of the target microcode program and a size of the target microcode program; and the host allocates the logical address to the target microcode program based on the size of the target microcode program, and establishes an association relationship between the user identifier and the logical address of the target microcode program.

In this embodiment of this application, the user may first register the to-be-offloaded target microcode program on the host, so that the host allocates the logical address to the target microcode program when registering the target microcode program. This improves efficiency of subsequently offloading the target microcode program.

Based on the method provided in the second aspect, in a possible implementation, the method further includes: The host sends a third packet to the DPU, where the third packet carries third indication information and the user identifier of the target microcode program, the third indication information indicates the DPU to execute a third static microcode program, and the third static microcode program is used to register a function identifier based on the user identifier of the target microcode program; and the host receives the function identifier returned by the DPU, where the second packet carries the function identifier.

This embodiment of this application further provides the third static microcode program deployed in the firmware of the DPU. The third static microcode program is used to register a microcode program on the host. In addition, an association relationship between the third static microcode program and the third indication information is extended in the microcode table. Correspondingly, the host is configured with a corresponding user-oriented third interface, and the user may trigger registration of the microcode program through the third interface. Based on this, the host can register a microcode program on the DPU only by including the third indication information and related information of the to-be-registered microcode program in the packet.

According to a third aspect, a microcode program offloading apparatus is provided. The microcode program offloading apparatus has a function of implementing behavior of the microcode program offloading method in the first aspect. The microcode program offloading apparatus includes at least one module, and the at least one module is configured to implement the microcode program offloading method according to the first aspect.

According to a fourth aspect, a microcode program offloading apparatus is provided. The microcode program offloading apparatus has a function of implementing behavior of the microcode program offloading method in the second aspect. The microcode program offloading apparatus includes at least one module, and the at least one module is configured to implement the microcode program offloading method according to the second aspect.

According to a fifth aspect, a DPU is provided. The DPU includes a processor and a memory. The memory is configured to store a program that supports the DPU to perform the microcode program offloading method according to the first aspect, and store data used to implement the microcode program offloading method according to the first aspect. The processor is configured to execute the program stored in the memory.

According to a sixth aspect, a host is provided. The host includes a processor and a memory. The memory is configured to store a program that supports the host to perform the microcode program offloading method according to the second aspect, and store data used to implement the microcode program offloading method according to the second aspect. The processor is configured to execute the program stored in the memory.

According to a seventh aspect, a computer-readable storage medium is provided. The computer-readable storage medium stores instructions, and when the instructions are run on a computer, the computer is enabled to perform the microcode program offloading method according to the first aspect, or the computer is enabled to perform the microcode program offloading method according to the second aspect.

According to an eighth aspect, a computer program product including instructions is provided. When the computer program product runs on a computer, the computer is enabled to perform the microcode program offloading method according to the first aspect, or the computer is enabled to perform the microcode program offloading method according to the second aspect.

Technical effect achieved by the technical means corresponding to the second aspect to the eighth aspect mentioned above is similar to technical effect achieved by the technical means corresponding to the first aspect or the second aspect, and is not described herein again.

### BRIEF DESCRIPTION OF DRAWINGS

FIG. 1 is a diagram of an architecture of a microcode program offloading system according to an embodiment of this application;
FIG. 2 is a diagram of an architecture of a DPU according to an embodiment of this application;
FIG. 3 is a diagram of an address translation rule between a logical address and a physical address according to an embodiment of this application;
FIG. 4 is a flowchart of a microcode program offloading method according to an embodiment of this application;
FIG. 5 is a flowchart of another microcode program offloading method according to an embodiment of this application;
FIG. 6 is a flowchart of another microcode program offloading method according to an embodiment of this application;
FIG. 7 is a diagram of an interface of a first interface according to an embodiment of this application;
FIG. 8 is a diagram of an interface of a third interface according to an embodiment of this application;
FIG. 9 is a diagram of a format of a third packet according to an embodiment of this application;
FIG. 10 is a diagram of a format of a first packet according to an embodiment of this application;
FIG. 11 is another schematic flowchart of calling a microcode program according to an embodiment of this application;
FIG. 12 is a diagram of an interface of a second interface according to an embodiment of this application;
FIG. 13 is a diagram of a format of a second packet according to an embodiment of this application;
FIGS. 14A and 14B are schematic flowcharts of offloading a microcode program and calling a microcode program according to an embodiment of this application;
FIG. 15 is a diagram of performance comparison according to an embodiment of this application;
FIG. 16 is a schematic flowchart of designing a key for a target microcode program according to an embodiment of this application;
FIG. 17 is a diagram of an extended function table according to an embodiment of this application;
FIG. 18 is a diagram of a structure of a microcode program offloading apparatus according to an embodiment of this application;
FIG. 19 is a diagram of a structure of another microcode program offloading apparatus according to an embodiment of this application;
FIG. 20 is a diagram of a structure of a computer device according to an embodiment of this application; and
FIG. 21 is a diagram of a structure of a DPU according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before embodiments of this application are described, application scenarios of embodiments of this application are first described.

In a CPU-centered data processing architecture, a CPU needs to process all network packets and data requests, gradually making CPU a bottleneck of computer processing performance. After that, a data plane development kit (data plane development kit, DPDK) and technologies such as remote direct memory access (remote direct memory access, RDMA) are put forward, and bypassing a host CPU for data processing became an important trend. In a data processing architecture of CPU+graphics processing unit (graphics processing unit, GPU)+DPU, the DPU takes an advantage of a data processing center to offload and accelerate network, storage, security, and virtualization services on key paths, releasing computational power of the CPU. In this way, the CPU can focus on resource management and task scheduling, greatly improving resource utilization and processing efficiency in the data processing architecture. However, addition of a new processing unit brings a great challenge to a user mode and a programming mode. How to design a new data processing architecture with strong scalability, user/developer friendliness, and high performance becomes an urgent problem to be resolved.

In some scenarios, a remote procedure call (remote procedure call, RPC) technology is used in a data processing architecture including a CPU and a DPU, to dynamically offload, to the DPU, a microcode program such as user load on the CPU. The RPC is a technology in which communication is performed between different processes through a network protocol. An advantage is that it makes cross-language and cross-platform interaction easier and more convenient. Through the RPC, a client can call a procedure on a remote server as a local procedure without considering communication details of a lower layer. Therefore, the RPC has advantages of flexibility and scalability.

For example, a developer separately implements an RPC server running on a DPU side and an RPC client running on a host side. Through agreed application interfaces, the RPC client on the host side remotely calls, in a function call manner, the RPC server that is listening and that is on the DPU. After completing a specified task, the RPC server returns an execution result to the RPC client. A request and a return value of the remote call are encapsulated into network packets according to an RPC protocol, and are transmitted and parsed between the RPC client and the RPC server through the application interface on the host side and the application interface on the DPU side. The RPC mode requires that the RPC server be running and listening before the RPC client sends any remote call request.

In the foregoing technology, in one aspect, interaction between the RPC client and the RPC server needs to be completed through a two-sided operation, which causes a delay problem. In another aspect, a communication capability of the RPC protocol is limited. As a result, microcode programs that can be offloaded to the DPU are limited.

In some other scenarios, a many-core processor architecture-based DPU is used in a data processing architecture. The many-core processor architecture-based DPU integrates a plurality of hardware accelerators including a smart memory (smart memory), and can implement flexible data packet processing and task offloading. Users and developers can compile many-core-oriented microcode programs on a general CPU programming framework and use a provided hardware accelerator library to develop and design various services on the DPU. After development is completed, all microcode programs are compiled and packaged into firmware (firmware), and the firmware is burnt into a flash (flash) memory of the DPU. When the DPU is powered on, all the microcode programs are loaded into the smart memory based on a mapping relationship between a logical address (the logical address indicates a location of the firmware in the flash memory) and a physical address (indicating a location in the smart memory). The smart memory may be, for example, a state-full smart memory (state-full smart memory, SMF).

Each specific microcode program is bound to a message type in a packet or a request, and a message type keyword and an entry address of a microcode program are stored in a specific register of the DPU. When receiving a packet or request, the DPU parses a message type in the packet or request and obtains an entry address of a microcode program through hardware. After a microcode thread is woken up and the entry address and some other metadata are transferred to the microcode thread, control is transferred to the microcode thread. The microcode thread sequentially obtains and executes instructions in the microcode program from the entry address.

The foregoing solution completely depends on hardware, and brings problems in flexibility and scalability while improving system performance. For example, if a microcode program needs to be modified, after the microcode program is modified, all microcode programs are recompiled and packed into firmware, and the firmware is re-burnt into the DPU when the DPU is powered on. Consequently, services are interrupted for a long time during service upgrade, for example, 20 minutes to 1 hour in some scenarios.

Based on this, an embodiment of this application provides a microcode program offloading method, so that a microcode program can be dynamically offloaded to a DPU during operation of the DPU, thereby dynamically modifying a microcode program during operation of the DPU, and avoiding interruption of a service that is running on the DPU due to update of the microcode program.

The following explains and describes a microcode program offloading method and system, and a related product that are provided in embodiments of this application.

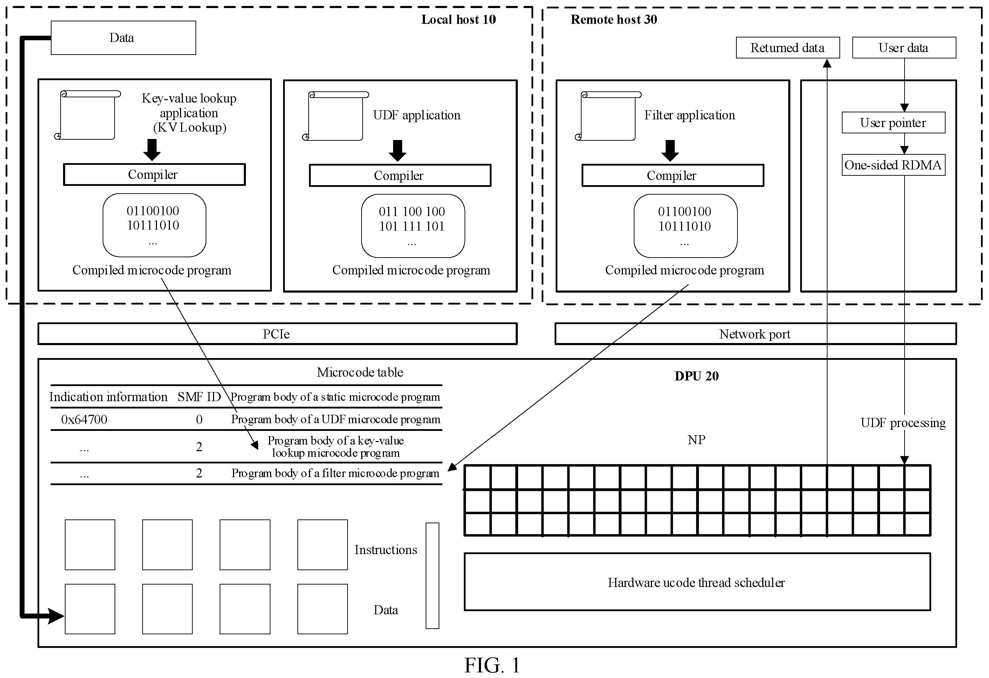

FIG. 1 is a diagram of an architecture of a microcode program offloading system according to an embodiment of this application. As shown in FIG. 1, the system includes a local host 10, a DPU 20, and a remote host 30.

The local host 10 and the DPU 20 are connected through a serial computer bus for communication. For example, the local host 10 communicates with the DPU 20 through a peripheral component interconnect express (peripheral component interconnect express, PCIe), thereby ensuring a delay and a bandwidth of local communication.

The remote host 30 is connected to the DPU 20 through a network port (net port) for communication. For example, the remote host 30 may communicate with the DPU 20 through a network port according to an RDMA protocol, so that the remote host 30 can perform one-sided RDMA remote calling of the DPU 20, thereby improving application performance.

As shown in FIG. 1, the remote host 30 may directly initiate an access request to the DPU 20 through a one-sided RDMA operation. The access request carries user data. After performing user-defined function (user-defined function, UDF) processing on the user data, a network processor (network processor, NP) on the DPU 20 may correspondingly directly return data to the remote host 30.

In this embodiment of this application, the local host 10 or the remote host 30 may dynamically offload a microcode program to the DPU 20 by using the method provided in this embodiment of this application during operation of the DPU 20, and remotely call a microcode program in the DPU 20. As shown in FIG. 1, the microcode program includes, for example, a key-value lookup (KV Lookup) application, a user-defined function (user-defined function, UDF) application, a filter (filter) application, and the like. Based on this, the system shown in FIG. 1 may also be referred to as a dynamic offloading development kit-based (dynamic offloading development kit, DODK) system.

In this embodiment of this application, the DPU 20 is a many-core processor-based DPU. The DPU 20 completes interaction with the host through a microcode table. The microcode table is also referred to as a microcode function call table, and the microcode table is stored in a register of the DPU 20. The microcode table is used to record indication information (also referred to as a message type) corresponding to a static microcode program in firmware of the DPU 20. The host may notify, through indication information carried in a packet, the DPU 20 of a static microcode program that currently needs to be executed.

To dynamically offload a microcode program to the DPU 20 during operation of the DPU 20, this embodiment of this application provides a first static microcode program deployed in the firmware of the DPU 20. The first static microcode program is used to dynamically offload any microcode program of the host to the DPU 20. In addition, an association relationship between the first static microcode program and first indication information is extended in the microcode table. Correspondingly, the host is configured with a corresponding user-oriented first interface, and a user may trigger offloading of the microcode program through the first interface. Based on this, the host can dynamically offload the microcode program to the DPU 20 during operation of the DPU 20 only by including the first indication information and the to-be-offloaded microcode program in the packet.

Further, this embodiment of this application further provides a second static microcode program deployed in the firmware of the DPU 20, and the second static microcode program is used to call a microcode program on the DPU 20. In addition, an association relationship between the second static microcode program and second indication information is extended in the microcode table. Correspondingly, the host is configured with a corresponding user-oriented second interface, and the user may trigger calling of the microcode program through the second interface. Based on this, the host can call the microcode program on the DPU 20 only by including the second indication information and related information of the to-be-called microcode program in the packet. In this manner, it is unnecessary to store, in the microcode table of the DPU 20, indication information corresponding to each microcode program in all offloaded microcode programs, thereby avoiding a case in which a quantity of microcode programs that can be offloaded to the DPU 20 is limited due to a space limitation of the register of the DPU 20.

In addition, this embodiment of this application further provides a third static microcode program deployed in the firmware of the DPU 20. The third static microcode program is used to register a microcode program on a host. In addition, an association relationship between the third static microcode program and third indication information is extended in the microcode table. Correspondingly, the host is configured with a corresponding user-oriented third interface, and the user may trigger registration of the microcode program through the third interface. Based on this, the host can register a microcode program on the DPU 20 only by including the third indication information and related information of the to-be-registered microcode program in the packet.

In addition, as shown in FIG. 1, the DPU 20 further includes a hardware ucode thread scheduler (hardware ucode thread scheduler). The hardware ucode thread scheduler is configured to manage and maintain instructions and data on the DPU, and implement dynamic remote calling of a microcode program by using running logic in the DPU 20 in a manner in which an original hardware and microcode wakeup process of the DPU 20 is not damaged. The instructions may be understood as a specific operation that needs to be performed during an operation, for example, an addition operation, a subtraction operation, a multiplication operation, or a division operation. The data may be understood as data used during an operation.

For ease of subsequent understanding, functions of the three static microcode programs deployed in the firmware of the DPU 20 provided in this embodiment of this application are first described herein.

### (1) Third static microcode program: function_register (func name)

The user triggers a registration request through the third interface, where the registration request carries a user identifier (marked as func name) of a to-be-offloaded target microcode program and a size (size) of the target microcode program. After obtaining the registration request, the host allocates a logical address to the target microcode program based on the size of the target microcode program, and adds an association relationship between the allocated logical address and the user identifier of the target microcode program to a local function table.

When allocating the logical address, the host ensures that a logical address of a static microcode program that is originally burnt into the firmware of the DPU is not overwritten, so that the original static microcode program in the DPU can still be normally executed. For example, the host may maintain a base address. The base address may be understood as an end address of a logical address of a static microcode program that has been burnt into the DPU. Based on this, each time the host allocates an address to a to-be-offloaded target microcode program, the host may start allocating the address from the base address, to ensure that an allocated address does not overwrite the logical address of the static microcode program that has been burnt into the DPU.

In addition, after obtaining the registration request, the host may further send a third packet to the DPU. The third packet carries the third indication information and the user identifier of the target microcode program, to indicate the DPU to execute the third static microcode program. The third microcode program registers a unique function identifier for the target microcode program.

### (2) First static microcode program: function_offload (func name)

The user triggers an offloading request through the first interface, where the offloading request carries the user identifier of the to-be-offloaded target microcode program and a program body of the target microcode program. The host finds, based on the offloading request, an allocated logical address from the function table, and programs, by using a cross-compiler, the program body of the target microcode program into instructions executable by the microcode thread. For ease of subsequent understanding, the instructions obtained through compilation are referred to as microcode data. The host sends a first packet to the DPU, where the first packet carries the first indication information, the microcode data, and the logical address, so that the host executes the first static microcode program based on the first indication information.

### (3) Second static microcode program: function_exec (func_lva, func_code)

The user triggers a calling request through the second interface, where the calling request carries the user identifier of the target microcode program and a parameter (marked as func_code) required for executing the target microcode program. The host finds, based on the call request, the allocated logical address and a function identifier from the function table, where the function identifier and the logical address may be referred to as a function pointer (marked as func_lva); and sends a second packet to the DPU, where the second packet carries the second indication information, the logical address, the function identifier, and the parameter, so that the host executes the second static microcode program based on the second indication information.

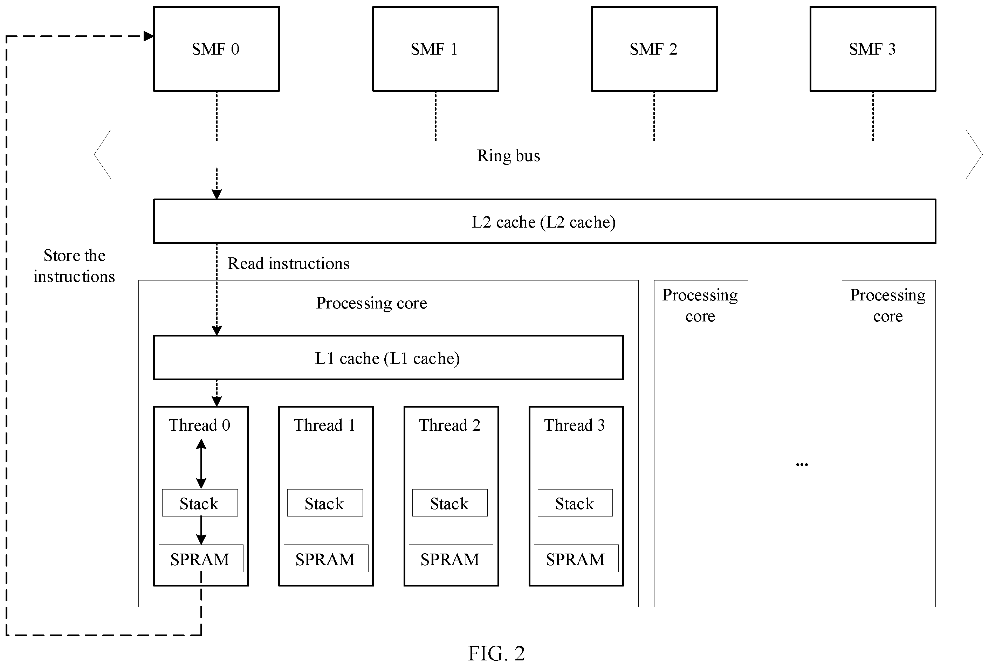

FIG. 2 is a diagram of an architecture of a DPU according to an embodiment of this application. As shown in FIG. 2, the DPU includes a plurality of processing cores (cores), a plurality of SMFs, and an L2 cache (L2 cache). The plurality of processing cores, the L2 cache, and the plurality of SMFs communicate with each other through a ring (ring) bus. In FIG. 2, four SMFs are used as an example for description. A quantity of SMFs is not limited in embodiments of this application.

For example, as shown in FIG. 2, each processing core includes an L1 cache (L1 cache) and a plurality of microcode threads (threads). Each microcode thread further includes a stack (stack) and a single-port random access memory (single-port random access memory, SPRAM). The stack and the SPRAM are configured to store data, the L1 cache, the L2 cache, and the SMF are configured to store instructions. In other words, in this embodiment of this application, the DPU uses a storage architecture in which data and instructions are separated.

Based on the foregoing content, it can be learned that three static microcode programs are extended in the firmware of the DPU. These static microcode programs are burnt into the firmware of the DPU by the host side when the DPU is powered on.

In some embodiments, an implementation of burning the static microcode program into the firmware of the DPU may be as follows: After writing and creating the static microcode program, the host side compiles all static microcode, packages the static microcode into firmware, and burns the firmware into a flash memory in the DPU. When the DPU is powered on, all instructions in the firmware are read from the flash memory and cross-written into a smart memory. In this case, the instructions complete translation from a logical address (an offset in the flash memory) to a physical address (a location in the smart memory). At the same time, the logical address of the static microcode program and indication information bound to the static microcode program are loaded into a microcode table of a specified register. The indication information is also referred to as a message type. During operation of the DPU, when receiving a packet, a hardware ucode thread scheduler parses indication information in the packet, queries a register to determine a to-be-executed static microcode program, and writes a logical address of the to-be-executed static microcode program into an SPRAM of a microcode thread before waking up the microcode thread. After being woken up, the microcode thread executes a segment of common microcode, where content of the common microcode is to translate an address of instructions stored in the SPRAM into a function pointer and directly perform jump execution, and the translation from the logical address to the physical address of the instructions is automatically completed by the L1 cache or the L2 cache when a miss event occurs. As shown in FIG. 2, the hardware ucode thread scheduler checks the L1 cache, the L2 cache, and the SMF in sequence to obtain a required instruction.

In addition, in this embodiment of this application, to implement dynamic offloading of a microcode program during operation of the DPU, a person skilled in the art may trace and analyze logical addresses (addresses that can be viewed by the host) of instructions in the firmware and physical locations at which the instructions are stored after the DPU is powered on, to establish a mapping rule between the logical address and the physical address of the instructions in the DPU. In other words, the DPU stores an address translation rule, and the address translation rule indicates the mapping relationship between the logical address and the physical address, so that the first static microcode program translates the logical address of the target microcode program into the physical address according to the address translation rule. In this case, the target microcode program can be offloaded based on the physical address.

In addition, in an architecture in which data is stored separately, when a target microcode program is offloaded, data in the target microcode program is directly stored in a stack corresponding to a corresponding thread and an SPRAM, and a location of a to-be-stored SMF needs to be determined for instructions in the target microcode program according to an address translation rule. Based on this, the address translation rule may be understood as a mapping relationship between a logical address and a physical address of the SMF.

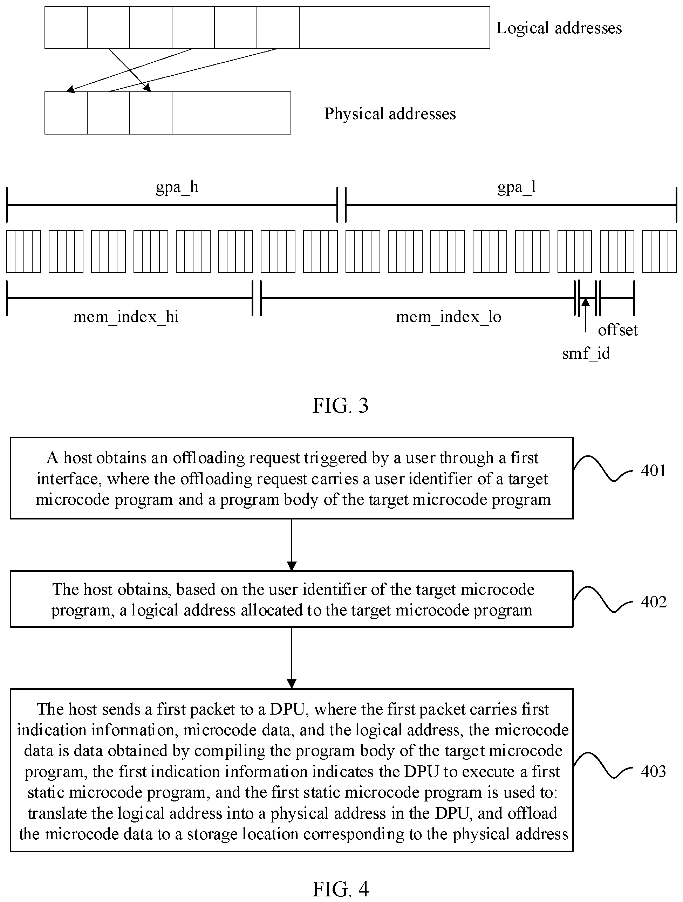

In some embodiments, instructions in a microcode program is stored in the SMF in an array manner in a unit of 16 bytes. Therefore, a linear table descriptor in the SMF may be used to represent a physical address of the instruction. FIG. 3 is a diagram of an address translation rule between a logical address and a physical address according to an embodiment of this application. GPA represents a logical address of an instruction. A physical address is a combination of four items: mem_index_hi, mem_index_lo, smf_id, and offset, where mem_index_hi and mem_index_lo indicate index numbers of a linear table in an SMF, smf_id indicates a unique identifier of the SMF, and offset indicates an offset within 16 bytes in the linear table in the SMF.

According to the foregoing address translation rule, during operation of a DPU, a host may trigger a memory access instruction, where the memory access instruction carries a logical address, so that the DPU searches for a corresponding physical address based on the logical address, and accesses (for example, writes and modifies) instructions in the SMF based on the physical address, thereby dynamically modifying the instructions during running of the DPU.

In addition, because resources in the DPU are limited, in addition to storing instructions, the SMF may further store public data required for running a system and a service. Therefore, a universal interface that can be read and written may be opened to a microcode thread. The following is an example of an interface for the DPU to access data or instructions stored in the SMF based on parameters such as mem_index_hi and mem_index_lo:
smf_lt_extend_cachemod_store_without_gpa(sp_addr,cmd_hdr,cmd_2nd_4bytes,mem_index_h,mem_in dex_l, key_size, byte_mask_enable, srctagl).

Through the foregoing interface, a person skilled in the art may store executable instructions at a specified physical location of the SMF of the DPU in advance, and obtain a logical address of the executable instructions according to the address translation rule shown in FIG. 3. Subsequently, the person skilled in the art may trigger, based on the logical address, dynamic modification of the instructions in the SMF.

It should be noted that FIG. 2 is used as an example to describe the architecture of the DPU provided in embodiments of this application. The architecture of the DPU is not limited in embodiments of this application, and is not described one by one herein.

FIG. 4 is a flowchart of a microcode program offloading method according to an embodiment of this application. The method is, for example, applied to the host side in the system shown in FIG. 1. As shown in FIG. 4, the method includes the following several steps.

Step 401: A host obtains an offloading request triggered by a user through a first interface, where the offloading request carries a user identifier of a target microcode program and a program body of the target microcode program.

Step 402: The host obtains, based on the user identifier of the target microcode program, a logical address allocated to the target microcode program.

Step 403: The host sends a first packet to a DPU, where the first packet carries first indication information, microcode data, and the logical address, the microcode data is data obtained by compiling the program body of the target microcode program, the first indication information indicates the DPU to execute a first static microcode program, and the first static microcode program is used to: translate the logical address into a physical address in the DPU, and offload the microcode data to a storage location corresponding to the physical address.

This embodiment of this application provides the first static microcode program deployed in firmware of the DPU, and the first static microcode program is used to dynamically offload any microcode program of the host to the DPU. In addition, an association relationship between the first static microcode program and the first indication information is extended. Correspondingly, the host is configured with a corresponding user-oriented first interface, and a user may trigger offloading of the microcode program through the first interface. Based on this, the host can dynamically offload the microcode program to the DPU during operation of the DPU only by including the first indication information and the to-be-offloaded microcode program in the packet.

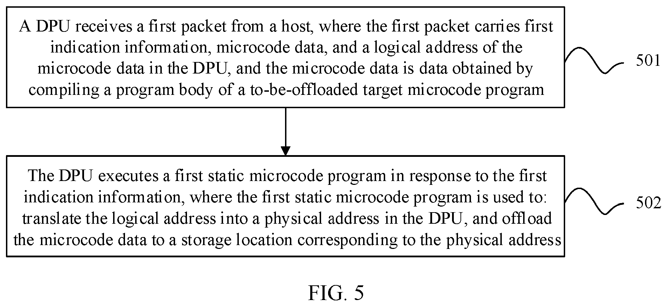

FIG. 5 is a flowchart of another microcode program offloading method according to an embodiment of this application. The method is, for example, applied to the DPU side in the system shown in FIG. 1. As shown in FIG. 5, the method includes the following several steps.

Step 501: A DPU receives a first packet from a host, where the first packet carries first indication information, microcode data, and a logical address of the microcode data in the DPU, and the microcode data is data obtained by compiling a program body of a to-be-offloaded target microcode program.

Step 502: The DPU executes a first static microcode program in response to the first indication information, where the first static microcode program is used to: translate the logical address into a physical address in the DPU, and offload the microcode data to a storage location corresponding to the physical address.

This embodiment of this application provides the first static microcode program deployed in firmware of the DPU, and the first static microcode program is used to dynamically offload any microcode program of the host to the DPU. In addition, an association relationship between the first static microcode program and the first indication information is extended. Based on this, the host can dynamically offload the microcode program to the DPU during operation of the DPU 20 only by including the first indication information and the to-be-offloaded microcode program in the packet.

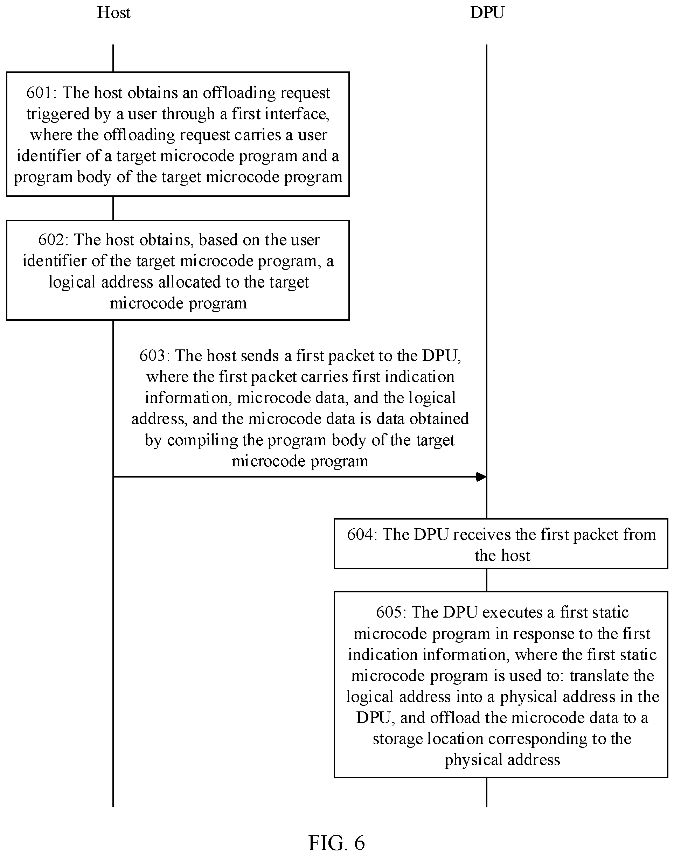

FIG. 6 is a flowchart of another microcode program offloading method according to an embodiment of this application. The method is, for example, applied to the system shown in FIG. 1. As shown in FIG. 6, the method includes the following several steps.

Step 601: A host obtains an offloading request triggered by a user through a first interface, where the offloading request carries a user identifier of a target microcode program and a program body of the target microcode program.

The user identifier may be, for example, an identifier like a name configured by the user for the target microcode program. The program body that is of the target microcode program and that is carried in the offloading request may be understood as code corresponding to the target microcode program.

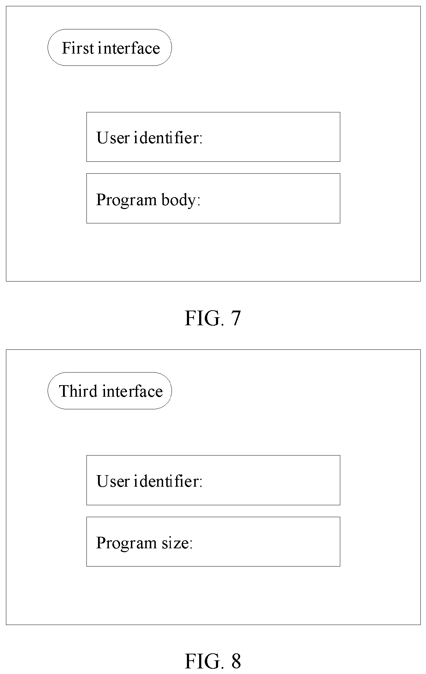

FIG. 7 is a diagram of an interface of the first interface according to an embodiment of this application. As shown in FIG. 7, when detecting a tap operation performed by the user on a "first interface" option on a display interface, the host displays a user identifier input window and a program body input window, so that the user triggers the offloading request for the target microcode program based on the two windows.

Step 602: The host obtains, based on the user identifier of the target microcode program, a logical address allocated to the target microcode program.

When the host obtains the offloading request for the target microcode program, to facilitate subsequent offloading of the target microcode program by a DPU according to a mapping rule between a logical address on a host side and a physical address on a DPU side, the host needs to first obtain the logical address allocated to the target microcode program. It should be noted that, in embodiments of this application, the logical address is specifically an address in a flash memory of the DPU. Because the logical address is visible to the host, the logical address is also referred to as a logical address on the host side.

In some embodiments, the host may temporarily allocate the logical address to the target microcode program when obtaining the offloading request for the target microcode program.

Optionally, in some other embodiments, the user may first register the to-be-offloaded target microcode program on the host, so that the host allocates the logical address to the target microcode program when registering the target microcode program. This improves efficiency of subsequently offloading the target microcode program.

For example, an implementation in which the user registers the target microcode program on the host may be as follows: The host obtains a registration request triggered by the user through a third interface, where the registration request carries the user identifier of the target microcode program and a size of the target microcode program; and the host allocates the logical address to the target microcode program based on the size of the target microcode program, and establishes an association relationship between the user identifier and the logical address of the target microcode program.

For example, the allocated logical address includes a start address and an address length. Optionally, a start address and an end address may alternatively be included.

FIG. 8 is a diagram of an interface of the third interface according to an embodiment of this application. As shown in FIG. 8, when detecting a tap operation performed by the user on a "third interface" option on the display interface, the host displays a user identifier input window and a program size input window, so that the user triggers the registration request for the target microcode program based on the two windows.

In addition, after establishing the association relationship between the user identifier and the logical address of the target microcode program, the host may further add the association relationship between the user identifier and the logical address of the target microcode program to a local function table, to subsequently find the association relationship in the function table.

In addition, because the user identifier of the target microcode program is usually a character string, which is not conducive to a subsequent operation, the host may further register a function identifier for the target program on the DPU. For example, the function identifier may be a two-digit number. The function identifier can be used to uniquely identify the target microcode program during subsequent internal interaction between the host and the DPU, to improve efficiency of the interaction between the host and the DPU.

In some embodiments, an implementation in which the host registers the function identifier for the target program on the DPU may be as follows: The host sends a third packet to the DPU, where the third packet carries third indication information and the user identifier of the target microcode program; the DPU receives the third packet from the host; the DPU executes a third static microcode program in response to the third indication information, where the third static microcode program is used to register the function identifier based on the user identifier of the target microcode program; the DPU returns the function identifier to the host; and the host receives the function identifier returned by the DPU.

Optionally, the third packet may further carry other information such as the size of the target microcode program.

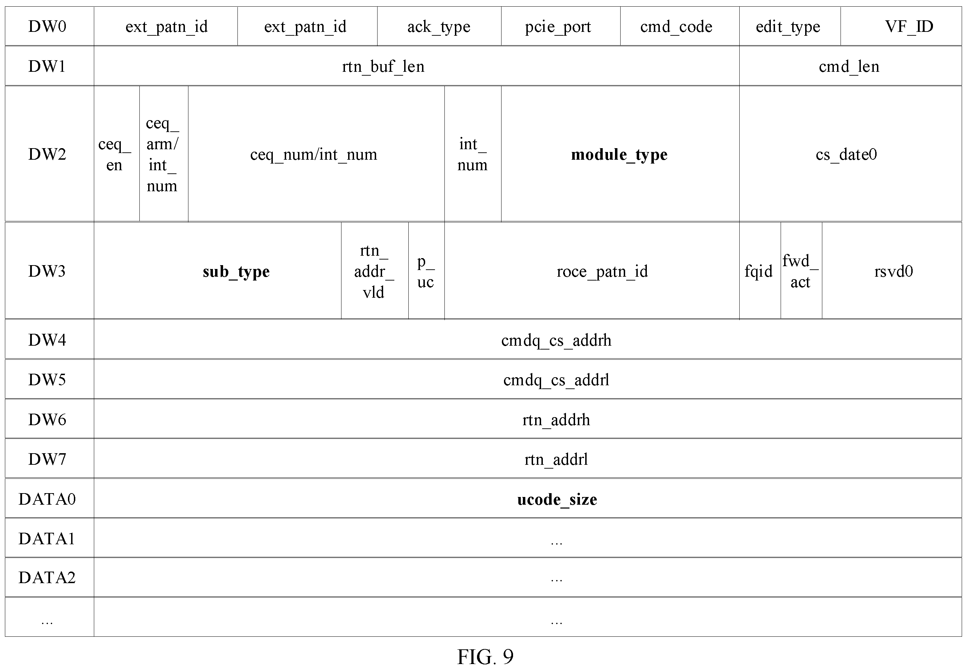

FIG. 9 is a diagram of a format of the third packet according to an embodiment of this application. As shown in FIG. 9, a sub-type (sub-type) field in the packet sent by the host to the DPU carries the third indication information, and a data field carries the user identifier of the target microcode program and the size (ucode_size) of the target microcode program.

In FIG. 9, rows marked with DW are a packet header of the third packet, where DW is short for double word, and indicates that there are 4 bytes in each row, and there are 32 bits in total. Rows marked with DATA constitute a data portion other than the packet header of the third packet.

In addition, a value of a module_type (module_type) field in the third packet in FIG. 9 indicates that the current packet is a packet delivered by the host to the DPU. Based on the value of the module_type (module_type) field and a value of the sub-type (sub-type) field, the DPU may determine that the host currently needs to execute the third static microcode program, that is, needs to register a microcode program. In addition, for explanations of other fields in the packet shown in FIG. 9, refer to a related standard. Examples are not described one by one herein.

In this scenario, a first packet sent by the host to the DPU may carry the function identifier or may not carry the function identifier.

In addition, that the DPU executes the third static microcode program in response to the third indication information may be understood as follows: The DPU searches, based on the third indication information, a microcode table for a static microcode program corresponding to the third indication information, to obtain the third static microcode program.

That is, the DPU stores an association relationship between the third indication information and the third static microcode program. The association relationship between the third indication information and the third static microcode program is pre-stored, so that when receiving the packet including the third indication information, the DPU can quickly determine that the third static microcode program needs to be executed currently, thereby improving execution efficiency of the DPU.

For example, an implementation in which the DPU executes the third static microcode program may be as follows: The DPU wakes up an idle microcode thread, and transfers related information of the third static microcode program, for example, a logical address of the third static microcode program, to the microcode thread. The microcode thread reads instructions in the third static microcode program based on the logical address of the third static microcode program, and executes the read instructions, to execute the third static microcode program.

In addition, after obtaining the function identifier for the target microcode program, the host may further add the function identifier to the association relationship that is between the user identifier and the logical address of the target microcode program and that is in the function table, that is, create, in the function table, an association relationship between three items: the user identifier, the function identifier, and the logical address of the target microcode program, so that the host can quickly find the function identifier subsequently.

Step 603: The host sends the first packet to the DPU, where the first packet carries first indication information, microcode data, and the logical address, and the microcode data is data obtained by compiling the program body of the target microcode program.

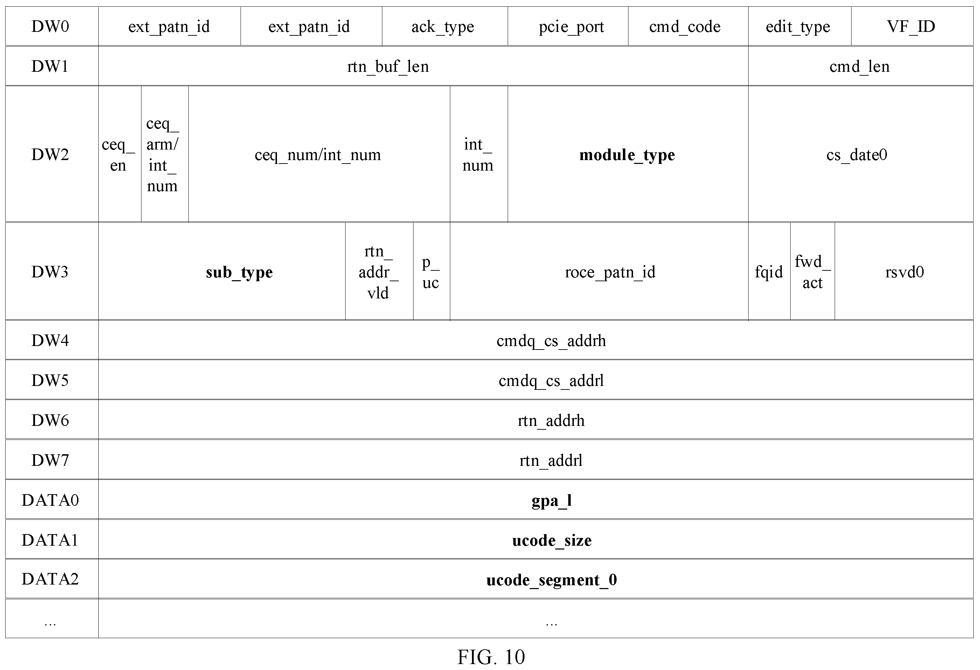

FIG. 10 is a diagram of a format of the first packet according to an embodiment of this application. As shown in FIG. 10, a sub-type (sub-type) field in the packet sent by the host to the DPU carries the first indication information, and a data field carries the microcode data (ucode_segment_0), the logical address (gpa_l), and the like.

Based on a value of a module_type (module_type) field and a value of the sub-type (sub-type) field, the DPU may determine that the host currently needs to execute a first static microcode program, that is, needs to dynamically offload a microcode program.

Step 604: The DPU receives the first packet from the host.

It can be learned from the architecture shown in FIG. 1 that the DPU may receive the first packet from the host through a serial computer bus or a network port. In other words, the method provided in embodiments of this application is applicable to both a local host and a remote host, thereby improving application flexibility of embodiments of this application.

Step 605: The DPU executes the first static microcode program in response to the first indication information, where the first static microcode program is used to: translate the logical address into a physical address in the DPU, and offload the microcode data to a storage location corresponding to the physical address.

That the DPU executes the first static microcode program in response to the first indication information may be understood as follows: The DPU searches, based on the first indication information, the microcode table for a static microcode program corresponding to the first indication information, to obtain the first static microcode program.

In other words, the DPU stores an association relationship between the first indication information and the first static microcode program. The association relationship between the first indication information and the first static microcode program is pre-stored, so that when receiving the packet including the first indication information, the DPU can quickly determine that the first static microcode program needs to be executed currently, thereby improving execution efficiency of the DPU.

Optionally, in embodiments of this application, the DPU may further obtain the association relationship between the first indication information and the first static microcode program in another manner, for example, obtain the association relationship from another network device in a network manner. Details are not described herein again.

For example, an implementation in which the DPU executes the first static microcode program may be as follows: The DPU wakes up an idle microcode thread, and transfers related information of the first static microcode program, for example, a logical address of the first static microcode program, to the microcode thread. The microcode thread reads instructions in the first static microcode program based on the logical address of the first static microcode program, and executes the instructions, to execute the first static microcode program.

In addition, based on the foregoing content, it can be learned that, in this embodiment of this application, the DPU uses a storage structure in which data and instructions are separated. Therefore, an example of an implementation in which the logical address is translated into the physical address and the microcode data is offloaded to the storage location corresponding to the physical address may be as follows: The logical address is translated into a physical address corresponding to an SMF, the instructions in the microcode data are offloaded to a storage location that is in the SMF and that is indicated by the physical address, data in the microcode data is offloaded to a stack and an SPRAM that correspond to a microcode thread, and a correspondence between the logical address and the stack and the SPRAM that correspond to the microcode thread is established, so that data in the microcode data is found based on the correspondence when the target microcode program is subsequently called.

In some embodiments, the DPU stores an address translation rule, and the address translation rule indicates a mapping relationship between a logical address and a physical address. The first static microcode program is used to translate the logical address into the physical address according to the address translation rule. The address translation rule is locally stored, so that execution efficiency of the first static microcode program can be improved.

Optionally, the DPU may further obtain the address translation rule in another manner, which is not described one by one herein.

Optionally, after translating the logical address into the physical address in the DPU, the DPU may further return the physical address to the host, and the host may add the physical address to an entry in which the target microcode program is located in a function table. Subsequently, the host may directly send an access request including the logical address to the DPU, to access instructions in the target microcode program, for example, read or modify instructions.

In conclusion, this embodiment of this application provides the first static microcode program deployed in firmware of the DPU. The first static microcode program is used to dynamically offload any microcode program of the host to the DPU. In addition, an association relationship between the first static microcode program and the first indication information is extended. Correspondingly, the host is configured with the corresponding user-oriented first interface, and the user may trigger offloading of the microcode program through the first interface. Based on this, the host can dynamically offload the microcode program to the DPU during operation of the DPU only by including the first indication information and the to-be-offloaded microcode program in the packet.

Based on the embodiment shown in FIG. 6, after the target microcode program is offloaded to the DPU, the user may subsequently call the target microcode program on the DPU. In some embodiments, a piece of corresponding target indication information (also referred to as a message type) may be configured for the target microcode program, and a correspondence between the logical address and the target indication information of the target microcode program is stored in the microcode table of the DPU, so that the host subsequently directly calls the target microcode program by including the target indication information in the packet.

Optionally, in some other embodiments, to avoid a case in which a quantity of microcode programs that can be offloaded to the DPU is limited due to a space limitation of a register of the DPU, this embodiment of this application further provides a second static microcode program deployed in the firmware of the DPU. The second static microcode program is used to call any microcode program on the DPU. In addition, an association relationship between the second static microcode program and second indication information is extended in the microcode table. Correspondingly, the host is configured with a corresponding user-oriented second interface, and the user may trigger calling of the microcode program through the second interface. Based on this, the host can call any microcode program on the DPU only by including the second indication information and related information of the to-be-called microcode program in the packet, and does not need to store a correspondence between each microcode program and indication information in the microcode table of the register of the DPU. The following describes the implementation in detail.

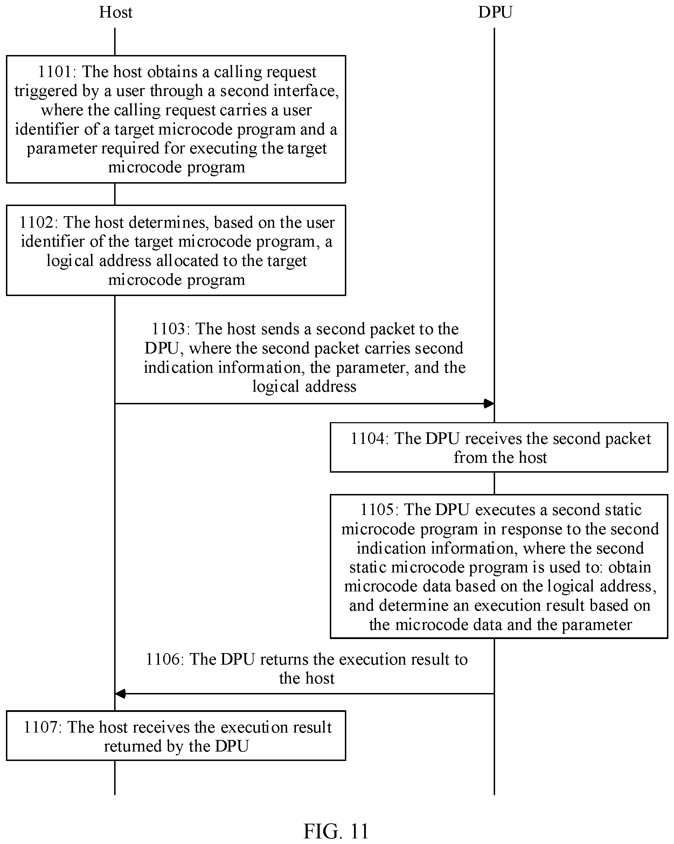

FIG. 11 is another schematic flowchart of calling a microcode program according to an embodiment of this application. As shown in FIG. 11, the procedure includes the following steps.

Step 1101: A host obtains a calling request triggered by a user through a second interface, where the calling request carries a user identifier of a target microcode program and a parameter required for executing the target microcode program.

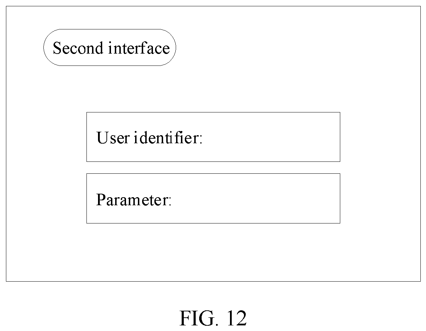

FIG. 12 is a diagram of an interface of the second interface according to an embodiment of this application. As shown in FIG. 12, when detecting a tap operation performed by the user on a "second interface" option on a display interface, the host displays a user identifier input window and a parameter input window, so that the user triggers the calling request for the target microcode program based on the two windows.

Step 1102: The host determines, based on the user identifier of the target microcode program, a logical address allocated to the target microcode program.

For an implementation of step 1102, refer to the implementation of step 602 in the embodiment in FIG. 6. Details are not described herein again.

Step 1103: The host sends a second packet to a DPU, where the second packet carries second indication information, a parameter, and the logical address.

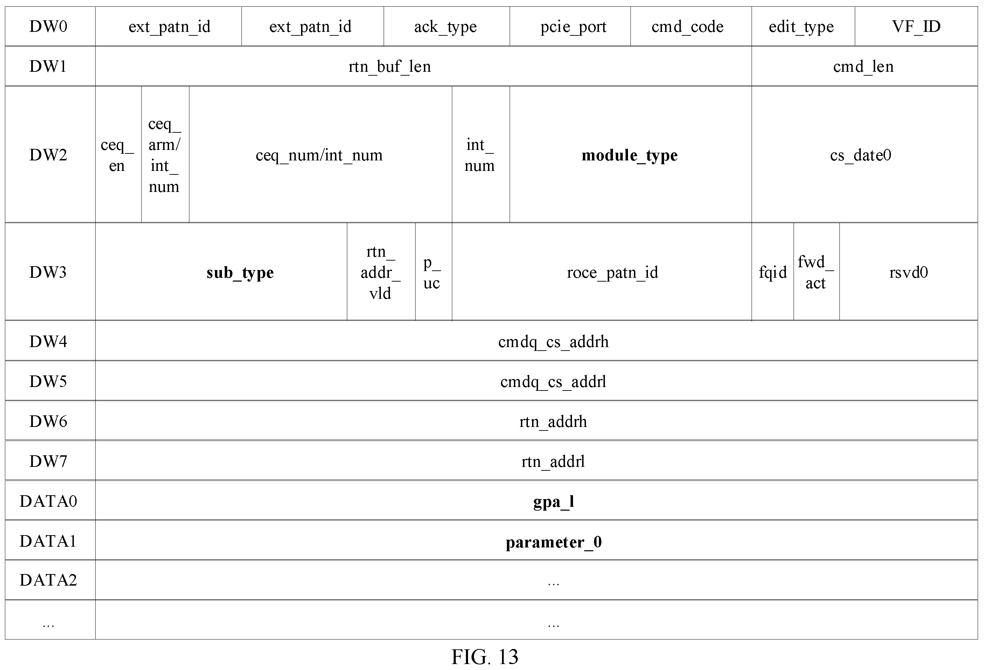

FIG. 13 is a diagram of a format of the second packet according to an embodiment of this application. As shown in FIG. 13, a sub-type (sub-type) field in the packet sent by the host to the DPU carries the second indication information, and a data field carries the parameter (parameter_0), the logical address (gpa_l), and the like.

Based on a value of a module_type (module_type) field and a value of the sub-type (sub-type) field, the DPU may determine that the host currently needs to execute a second static microcode program, that is, needs to call a microcode program on the DPU.

Optionally, in some other embodiments, to facilitate a subsequent operation of the DPU, the second packet may further carry a function identifier registered for the target microcode program. The host may search, based on the user identifier, a function table for the function identifier registered for the target microcode program.

Step 1104: The DPU receives the second packet from the host.

Step 1105: The DPU executes the second static microcode program in response to the second indication information, where the second static microcode program is used to: obtain microcode data based on the logical address, and determine an execution result based on the microcode data and the parameter.

That the DPU executes the second static microcode program in response to the second indication information may be understood as follows: The DPU searches, based on the second indication information, the microcode table for a static microcode program corresponding to the second indication information, to obtain the second static microcode program.

That is, the DPU stores an association relationship between the second indication information and the second static microcode program. The association relationship between the second indication information and the second static microcode program is pre-stored, so that when receiving the packet including the second indication information, the DPU can quickly determine that the second static microcode program needs to be executed currently, thereby improving execution efficiency of the DPU.

For example, an implementation in which the DPU executes the second static microcode program may be as follows: The DPU wakes up an idle microcode thread, and transfers related information of the second static microcode program, for example, a logical address of the second static microcode program, to the microcode thread. The microcode thread reads instructions in the second static microcode program based on the logical address of the second static microcode program, and executes the instructions, to execute the second static microcode program.

When executing the second static microcode program, the microcode thread may generate a function pointer based on the function identifier and the logical address, obtain, based on the function pointer, the microcode data corresponding to the target microcode program, and then determine the execution result based on the microcode data and the parameter.

Step 1106: The DPU returns the execution result to the host.

Step 1107: The host receives the execution result returned by the DPU.

The following uses the interaction between the local host and the DPU in FIG. 1 as an example to describe how the host offloads the target microcode program to the DPU and calls the target microcode program.

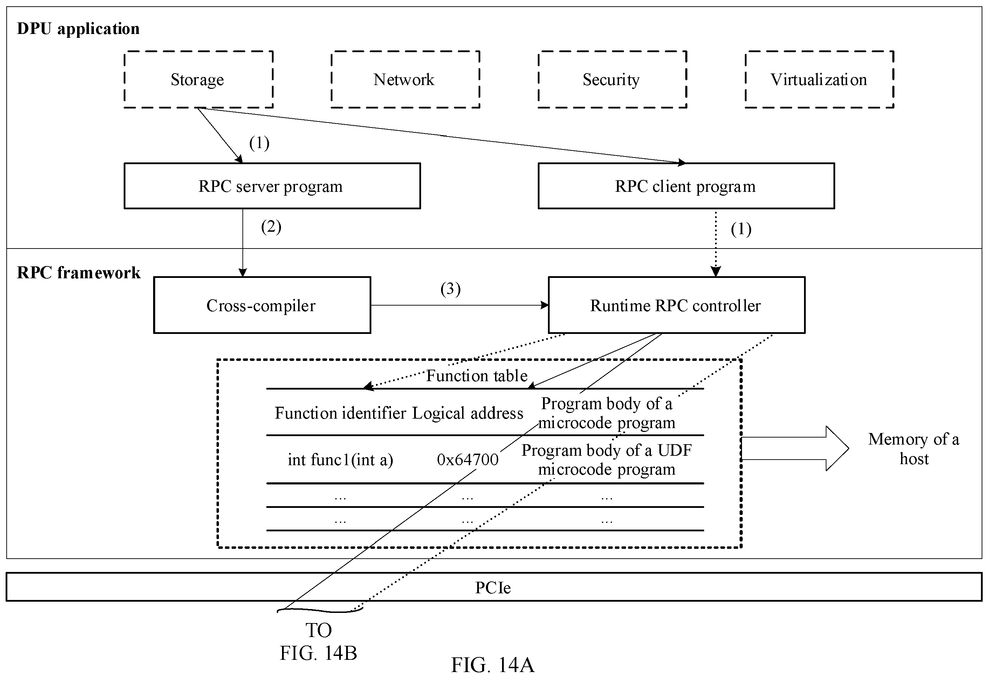

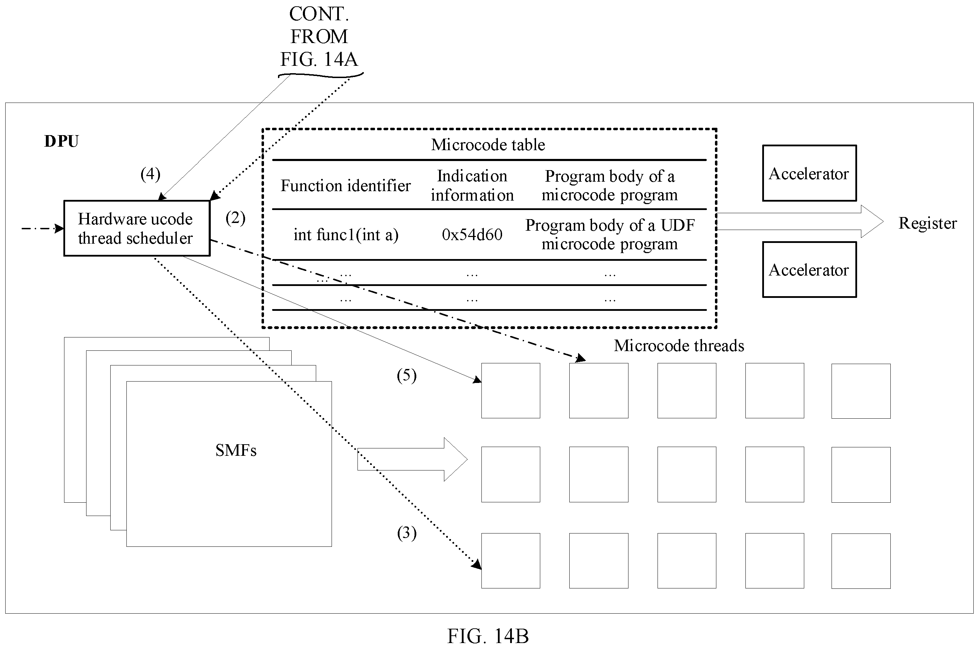

FIGS. 14A and 14B are schematic flowcharts of offloading a microcode program and calling a microcode program according to an embodiment of this application. As shown in FIGS. 14A and 14B, a real-time microcode program offloading process on a host side is shown by a solid line with a black arrow in FIGS. 14A and 14B. Specifically, the following steps are included.

Step (1): A user and a developer may design and implement a DPU application based on an RPC mode, including an RPC client program running on a host and an RPC server program running on a DPU, where the RPC server program is a to-be-offloaded target microcode program. The DPU application may be, for example, a storage application, a network application, a security application, or a virtualization application.

Step (2): The target microcode program is first compiled and linked by a cross-compiler on the host into microcode data that can be executed by a microcode thread.

Step (3): A runtime RPC controller on the host allocates a logical address to the target microcode program based on a function table maintained in a memory of the host, and registers a function identifier for the target microcode program on the DPU by sending a third packet to the DPU. The runtime RPC controller records meta information of the target microcode program, where the meta information includes the function identifier, the logical address, a user identifier, and the like.

Step (4): Through a driver, the runtime RPC controller includes the logical address and the microcode data in a first packet and sends the first packet to the DPU, where the first packet is captured by a hardware ucode thread scheduler in the DPU.

Step (5): The hardware ucode thread scheduler determines, based on a reserved field (namely, first indication information) in the first packet, that a first static microcode program (namely, function_offload) needs to be executed, and wakes up an idle microcode thread to execute the first static microcode program. In a process of executing the first static microcode program, the microcode thread sequentially packages instructions in the received microcode data, and calls an application programming interface (application programming interface, API) of a smart memory according to a logical address and an address translation rule, to store the received instructions.

As shown in FIGS. 14A and 14B, a real-time microcode program calling process on the host side is shown by a dashed line with a black arrow in FIGS. 14A and 14B. Specifically, the following steps are included.

Step (1): An RPC client program on a host sends a calling request to a runtime RPC controller through a predefined function interface (namely, a second interface).

Step (2): The RPC controller queries a function table, obtains a logical address, on a DPU, of an RPC server program (namely, a target microcode program) corresponding to the RPC client program, packages the logical address, a function identifier, a parameter provided by the client, and the like into a second packet, and sends the second packet to the DPU, where the second packet is captured by a hardware ucode thread scheduler in the DPU.

Step (3): The hardware ucode thread scheduler determines, based on a reserved field (namely, second indication information) in the second packet, that a second static microcode program (namely, function_exec) needs to be executed, and wakes up an idle microcode thread to execute the second static microcode program. In addition, the logical address, the function identifier, and the parameter are also transferred to the microcode thread. The second static microcode program creates a function pointer based on the function identifier and the logical address, transfers the parameter for execution, and returns a final execution result to the RPC client program.

In addition, the RPC framework shown in FIG. 14A is further compatible with DPU microcode calling implemented based on a "firmware update" mode. A specific procedure is shown by a dotted line with a black arrow in FIGS. 14A and 14B. As shown in FIGS. 14A and 14B, for a data packet from a network (for example, a remote host), the hardware ucode thread scheduler in the DPU disassembles and analyzes a message type (namely, indication information) of the data packet, queries the microcode table based on the indication information, to directly obtain a logical address of a to-be-called microcode program, and then wakes up an idle microcode thread to execute the microcode thread.

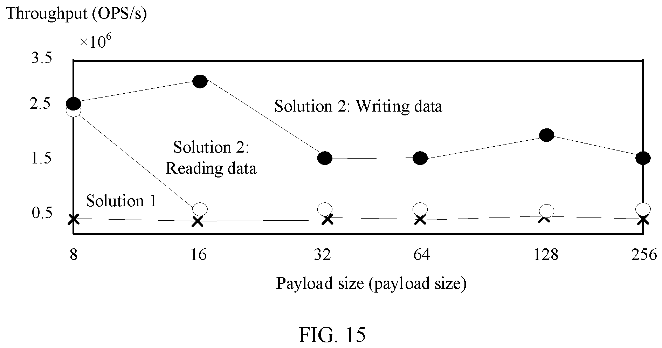

In conclusion, this embodiment of this application provides a microcode thread calling procedure, which greatly increases a quantity of microcode programs that can be supported by the DPU, and breaks through a use bottleneck of the DPU. In addition, the remote host can call the microcode thread on the DPU through one-sided RDMA, improving performance by three to six times. FIG. 15 is a diagram of performance comparison according to an embodiment of this application. Solution 1 in FIG. 15 is: burning a microcode program into a DPU in a firmware form during startup. Solution 2 is a microcode thread offloading and calling solution shown in FIGS. 14A and 14B. As shown in FIG. 15, in comparison with Solution 1, in Solution 2, when data is written into a DPU (that is, a microcode program is offloaded), throughput (unit: operations per second (operations per second, OPS/s)) performance is greatly improved. In addition, in Solution 2 in FIG. 15, data is read from the DPU, indicating that a host calls a microcode program in the DPU.

In addition, with expansion of the application scenarios of the DPU, increasing microcode programs are offloaded to the DPU, and even different microcode programs need to use the DPU for computation at the same time. When different microcode programs use a same DPU at the same time, efficient utilization of resources needs to be ensured while security is also guaranteed.

In some scenarios, the DPU may not be able to load all registered microcode programs due to a limited resource like a memory. In addition, different microcode programs require different memory space. To ensure efficiency of remote calling of microcode programs, a microcode management policy that can implement load balancing needs to be designed.

In some embodiments of embodiments of this application, before calling the target microcode program on the DPU, the host first checks an existence (existence) flag bit of the target microcode program in the function table. If the existence flag bit is 1 (that is, the target microcode program is loaded), the host directly calls the target microcode program; otherwise, if the existence flag bit is not 1, the host offloads the target microcode program to the DPU and sets the existence flag bit to 1. In this process, if the memory of the DPU is insufficient, for example, currently, there are no enough logical addresses to be allocated to the target microcode program, a microcode program is evicted from the function table according to a least recently used (least recently used, LRU) policy, that is, the microcode program is deleted from the DPU, and an entry corresponding to the microcode program is deleted from the function table. The LRU policy ensures that the function table is not occupied by a microcode program that is used for a short time, which may cause a denial-of-service (denial-of-service, DoS) attack.

In addition, to avoid memory fragmentation, the host may use a buddy allocator (buddy allocator) to manage logical addresses in the memory of the DPU, to ensure that the memory is repeatedly used when a microcode program is offloaded or deleted (that is, swapped in or swapped out). In addition, to ensure load balancing, the hardware ucode thread scheduler of the DPU may further adopt a time-division multiplexing and low-frequency priority policy, so that offloading or calling of different microcode programs may be fairly allocated to each piece of hardware of the DPU.

With the preceding load balancing policy, a throughput of the DPU can be increased by about 3.57 times and a delay can be reduced by about 40.9% to 59.5%.

In some other scenarios, it is also necessary to be able to authenticate remote microcode program calling initiated by a user, to avoid incorrect calling by the user and a malicious attack. At the same time, when microcode programs are called, it is necessary to ensure that different microcode programs do not call data of other microcode programs, thereby violating isolation. Therefore, a microcode management policy that can achieve security needs to be designed.

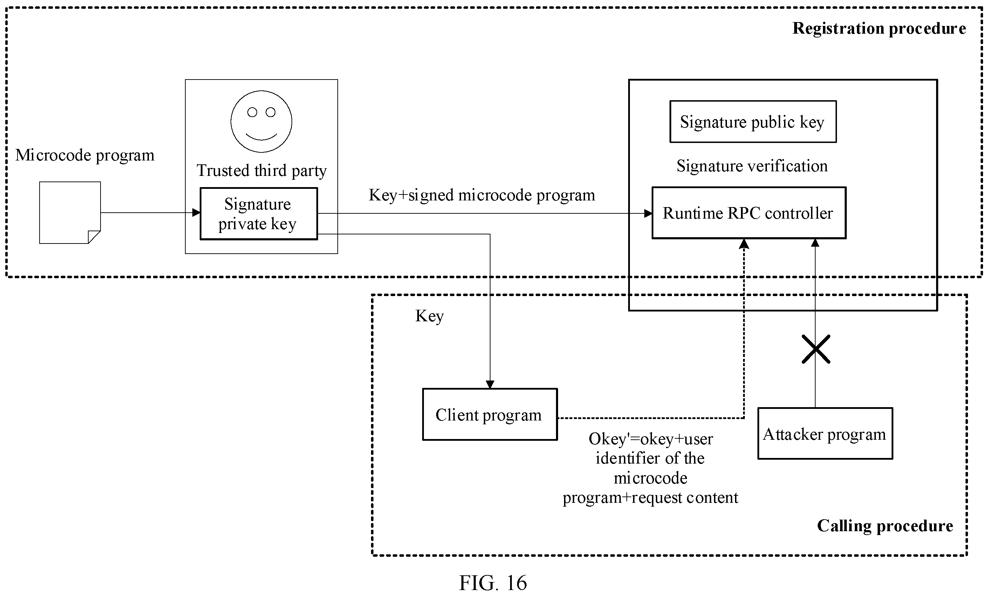

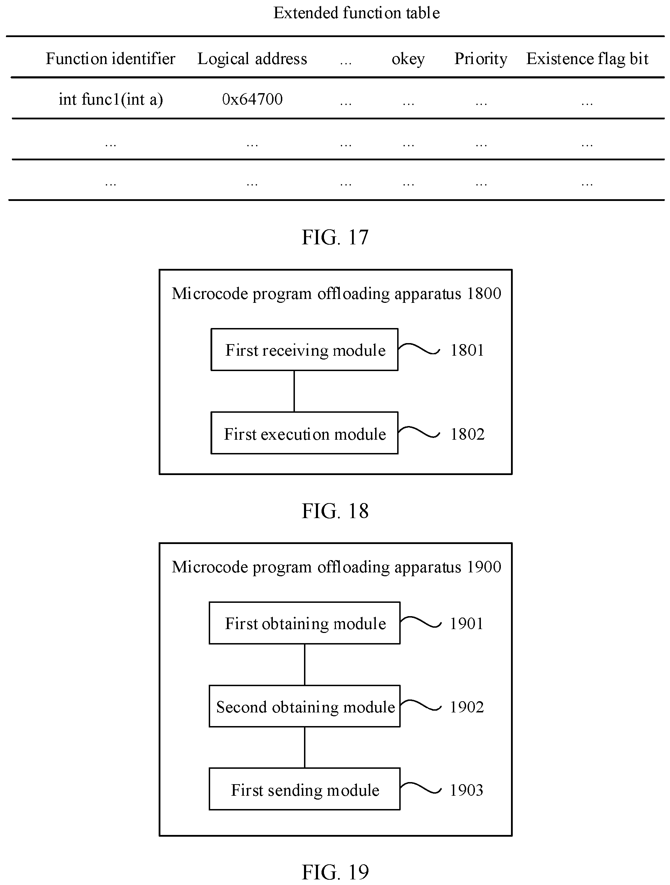

In this embodiment of this application, as shown in FIG. 16, when registering the target microcode program, the host may first randomly generate a random number as a key (owner key, okey) of the microcode program, and then provide the key and a signed target microcode program together to the runtime RPC controller of the host. In addition, the key is transmitted to the client program through a secure communication channel. In addition, after obtaining the key, the host may further add the key to the function table to obtain an extended function table. FIG. 17 is a diagram of the extended function table according to an embodiment of this application. As shown in FIG. 17, the extended function table includes information such as the function identifier, the user identifier, the logical address, the key, a priority, and the existence (existence) flag bit for the target microcode program.

As shown in FIG. 16, when calling the target microcode program, the client program attaches okey' and request content of okey', where the request content is, for example, a parameter required for executing the target microcode program. The runtime RPC controller verifies a permission (okey=okey') when querying the function table, and then calls the target microcode program on the DPU after the verification succeeds. Because only a registrant has a correct key, only the registrant and a remote caller with which the key is shared can call the target microcode program. Therefore, the method can implement a secure permission management mechanism.

In addition, in embodiments of this application, to prevent a brute-force attack, when the runtime RPC controller queries the function table to check the permission, when a quantity of check errors exceeds a threshold T, the target microcode program is deregistered (that is, deleted from the DPU) and removed from the function table, and error alarm information is raised.

In addition, to ensure isolation of the microcode program (a microcode program does not call data of another program), as shown in FIG. 16, the host may use a trusted third party (for example, a developer of the firmware) to calculate a hash value for the target microcode program by using a hash tool, for example, a secure hash algorithm (secure hash algorithm, SHA) 256, and sign the hash value. In addition, a public key of the signature is stored in the DPU. When the target microcode program is offloaded, the first static microcode program on the DPU calculates the hash value of the program of the target microcode program based on the public key, and verifies correctness of the signature, to ensure that the offloaded target microcode program passes verification of the trusted third party.

FIG. 18 is a diagram of a structure of a microcode program offloading apparatus according to an embodiment of this application. The apparatus is used in a DPU, and firmware of the DPU includes a first static microcode program. As shown in FIG. 18, the apparatus 1800 includes the following modules.

A first receiving module 1801 is configured to receive a first packet from a host. The first packet carries first indication information, microcode data, and a logical address of the microcode data in the DPU, and the microcode data is data obtained by compiling a program body of a to-be-offloaded target microcode program. For a specific implementation, refer to step 604 in the embodiment in FIG. 6.

A first execution module 1802 is configured to execute the first static microcode program in response to the first indication information. The first static microcode program is used to: translate the logical address into a physical address, and offload the microcode data to a storage location corresponding to the physical address. For a specific implementation, refer to step 605 in the embodiment in FIG. 6.

Optionally, the DPU stores an association relationship between the first indication information and the first static microcode program.

Optionally, the DPU stores an address translation rule, and the address translation rule indicates a mapping relationship between a logical address and a physical address.

The first static microcode program is used to translate the logical address into the physical address according to the address translation rule.

Optionally, the first receiving module is configured to:
receive the first packet from the host through a serial computer bus or a network port.

Optionally, the firmware of the DPU includes a second static microcode program.

The apparatus further includes:
a second receiving module, configured to receive a second packet from the host, where the second packet carries second indication information, a parameter required for executing the target microcode program, and the logical address;
a second execution module, configured to execute the second static microcode program in response to the second indication information, where the second static microcode program is used to: obtain the microcode data based on the logical address, and determine an execution result based on the microcode data and the parameter; and
a first sending module, configured to return the execution result to the host.

Optionally, the DPU stores an association relationship between the second indication information and the second static microcode program.

Optionally, the firmware of the DPU includes a third static microcode program.

The apparatus further includes:
a third receiving module, configured to receive a third packet from the host, where the third packet carries third indication information and a user identifier of the target microcode program;
a third execution module, configured to execute the third static microcode program in response to the third indication information, where the third static microcode program is used to register a function identifier based on the user identifier of the target microcode program; and
a second sending module, configured to return the function identifier to the host.

The second packet further carries the function identifier, and the second static microcode program is used to: generate a function pointer based on the function identifier and the logical address, and obtain the microcode data based on the function pointer.

Optionally, the DPU stores an association relationship between the third indication information and the third static microcode program.

This embodiment of this application provides the first static microcode program deployed in the firmware of the DPU, and the first static microcode program is used to dynamically offload any microcode program of the host to the DPU. In addition, an association relationship between the first static microcode program and the first indication information is extended. Correspondingly, the host is configured with the corresponding user-oriented first interface, and the user may trigger offloading of the microcode program through the first interface. Based on this, the host can dynamically offload the microcode program to the DPU during operation of the DPU only by including the first indication information and the to-be-offloaded microcode program in the packet.

It should be noted that, when the microcode program offloading apparatus provided in the foregoing embodiment offloads a microcode program, division of the foregoing functional modules is merely used as an example for description. In actual application, the foregoing functions may be allocated to different functional modules for implementation based on a requirement, that is, an internal structure of the device is divided into different functional modules, to implement all or a part of the foregoing described functions. In addition, the microcode program offloading apparatus provided in the foregoing embodiment and the method embodiment for offloading a microcode program belong to a same concept. For a specific implementation process, refer to the method embodiment, and details are not described herein again.

FIG. 19 is a diagram of a structure of another microcode program offloading apparatus according to an embodiment of this application. The apparatus is used in a host, the host is connected to a data processing unit DPU, and the host includes a first interface. The apparatus 1900 includes the following.

A first obtaining module 1901 is configured to obtain an offloading request triggered by a user through a first interface. The offloading request carries a user identifier of a target microcode program and a program body of the target microcode program. For a specific implementation, refer to step 601 in the embodiment in FIG. 6.

A second obtaining module 1902 is configured to obtain, based on the user identifier of the target microcode program, a logical address allocated to the target microcode program. For a specific implementation, refer to step 602 in the embodiment in FIG. 6.

A first sending module 1903 is configured to send a first packet to a DPU. The first packet carries first indication information, microcode data, and the logical address, the microcode data is data obtained by compiling the program body of the target microcode program, the first indication information indicates the DPU to execute a first static microcode program, and the first static microcode program is used to: translate the logical address into a physical address, and offload the microcode data to a storage location corresponding to the physical address. For a specific implementation, refer to step 603 in the embodiment in FIG. 6.

Optionally, the host further includes a second interface, and the apparatus further includes:
a third obtaining module, configured to obtain a calling request triggered by the user through the second interface, where the calling request carries the user identifier of the target microcode program and a parameter required for executing the target microcode program;
a determining module, configured to determine, based on the user identifier of the target microcode program, the logical address allocated to the target microcode program;
a second sending module, configured to send a second packet to the DPU, where the second packet carries second indication information, the parameter, and the logical address, the second indication information indicates the DPU to execute a second static microcode program, and the second static microcode program is used to: obtain the microcode data based on the logical address, and determine an execution result based on the microcode data and the parameter; and
a first receiving module, configured to receive the execution result returned by the DPU.

Optionally, the host further includes a third interface, and the apparatus further includes:
a fourth obtaining module, configured to obtain a registration request triggered by the user through the third interface, where the registration request carries the user identifier of the target microcode program and a size of the target microcode program; and
an allocation module, configured to: allocate the logical address to the target microcode program based on the size of the target microcode program, and establish an association relationship between the user identifier and the logical address of the target microcode program.

Optionally, the apparatus further includes:
a third sending module, configured to send a third packet to the DPU, where the third packet carries third indication information and the user identifier of the target microcode program, the third indication information indicates the DPU to execute a third static microcode program, and the third static microcode program is used to register a function identifier based on the user identifier of the target microcode program; and
a second receiving module, configured to receive the function identifier returned by the DPU.

The second packet carries the function identifier.

This embodiment of this application provides the first static microcode program deployed in the firmware of the DPU, and the first static microcode program is used to dynamically offload any microcode program of the host to the DPU. In addition, an association relationship between the first static microcode program and the first indication information is extended. Correspondingly, the host is configured with the corresponding user-oriented first interface, and the user may trigger offloading of the microcode program through the first interface. Based on this, the host can dynamically offload the microcode program to the DPU during operation of the DPU only by including the first indication information and the to-be-offloaded microcode program in the packet.

It should be noted that, when the microcode program offloading apparatus provided in the foregoing embodiment offloads a microcode program, division of the foregoing functional modules is merely used as an example for description. In actual application, the foregoing functions may be allocated to different functional modules for implementation based on a requirement, that is, an internal structure of the device is divided into different functional modules, to implement all or a part of the foregoing described functions. In addition, the microcode program offloading apparatus provided in the foregoing embodiment and the method embodiment for offloading a microcode program belong to a same concept. For a specific implementation process, refer to the method embodiment, and details are not described herein again.

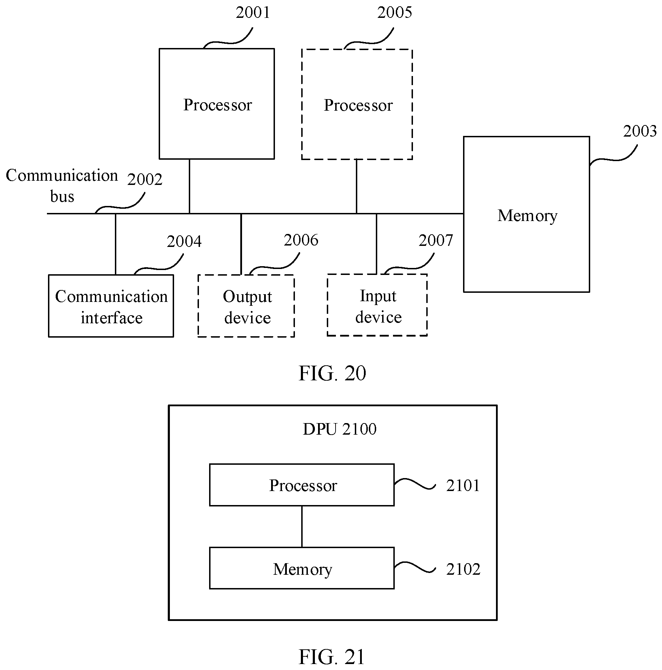

FIG. 20 is a diagram of a structure of a computer device according to an embodiment of this application. The host in the foregoing embodiments may be implemented by the computer device shown in FIG. 20. Refer to FIG. 20. The computer device includes at least one processor 2001, a communication bus 2002, a memory 2003, and at least one communication interface 2004.

The processor 2001 may be a general-purpose central processing unit (central processing unit, CPU), an application-specific integrated circuit (application-specific integrated circuit, ASIC), or one or more integrated circuits configured to control program execution of the solutions of this application.

The communication bus 2002 may include a path for transmitting information between the foregoing components.

The memory 2003 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only Memory, CD-ROM) or another compact disc storage, an optical disc storage (including a compact disc, a laser disc, an optical disc, a digital versatile disc, a Blu-ray disc, or the like), a magnetic disk or another magnetic storage device, or any other medium that can be configured to carry or store expected program code in a form of instructions or a data structure and that can be accessed by a computer, but is not limited thereto. The memory 2003 may exist independently, and is connected to the processor 2001 through the communication bus 2002. Alternatively, the memory 2003 may be integrated with the processor 2001.

The memory 2003 is configured to store program code for executing the solutions of this application, and the processor 2001 controls the execution. The processor 2001 is configured to execute the program code stored in the memory 2003. The program code may include one or more software modules. The host in the foregoing embodiments may determine, by using the processor 2001 and the one or more software modules in the program code in the memory 2003, data used for application development.

The communication interface 2004 is configured to communicate, through any apparatus like a transceiver, with another device or a communication network, like an Ethernet network, a radio access network (radio access network, RAN), or a wireless local area network (wireless local area networks, WLAN).

During specific implementation, in an embodiment, the computer device may include a plurality of processors, for example, the processor 2001 and a processor 2005 that are shown in FIG. 20. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the computer device may further include an output device 2006 and an input device 2007. The output device 2006 communicates with the processor 2001, and may display information in a plurality of manners. For example, the output device 2006 may be a liquid crystal display (liquid crystal display, LCD), a light-emitting diode (light-emitting diode, LED) display device, a cathode ray tube (cathode ray tube, CRT) display device, or a projector (projector). The input device 2007 communicates with the processor 2001 and may receive an input from a user in a plurality of manners. For example, the input device 2007 may be a mouse, a keyboard, a touchscreen device, or a sensor device.

The computer device may be a general-purpose computer device or a dedicated computer device. In a specific implementation, the computer device may be a desktop computer, a portable computer, a network server, a personal digital assistant (personal digital assistant, PDA), a mobile phone, a tablet computer, a wireless terminal device, a communication device, or an embedded device. A type of the computer device is not limited in embodiments of this application.

In addition, as shown in FIG. 21, an embodiment of this application further provides a DPU 2100. The DPU 2100 includes a processor 2101 and a memory 2102. The memory 2102 is configured to: store a program that supports the DPU to perform the method provided in embodiments of this application, and store data used to implement the method provided in embodiments of this application. The processor 2101 is configured to execute the program stored in the memory. For example, the processor includes a plurality of processing cores in FIG. 2, and the memory includes the SMF in FIG. 2.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a tape), an optical medium (for example, a digital versatile disc (digital versatile disc, DVD)), or a semi-conductive medium (for example, a solid-state disk (solid-state disk, SSD)).

A person of ordinary skill in the art may understand that all or a part of the steps of embodiments may be implemented by hardware or a program instructing related hardware. The program may be stored in a computer-readable storage medium. The storage medium may be a read-only memory, a magnetic disk, an optical disc, or the like.

The foregoing content is not intended to limit embodiments of this application. Any modification, equivalent replacement, or improvement made without departing from the spirit and principle of embodiments of this application shall fall within the protection scope of embodiments of this application.

## Claims

1. A microcode program offloading method, wherein the method is applied to a data processing unit DPU, and firmware of the DPU comprises a first static microcode program; and the method comprises:
receiving, by the DPU, a first packet from a host, wherein the first packet carries first indication information, microcode data, and a logical address of the microcode data in the DPU, and the microcode data is data obtained by compiling a program body of a to-be-offloaded target microcode program; and
executing, by the DPU, the first static microcode program in response to the first indication information, wherein the first static microcode program is used to: translate the logical address into a physical address, and offload the microcode data to a storage location corresponding to the physical address.

2. The method according to claim 1, wherein the DPU stores an association relationship between the first indication information and the first static microcode program.

3. The method according to claim 1 or 2, wherein the DPU stores an address translation rule, and the address translation rule indicates a mapping relationship between a logical address and a physical address; and
the first static microcode program is used to translate the logical address into the physical address according to the address translation rule.

4. The method according to any one of claims 1 to 3, wherein receiving, by the DPU, the first packet from the host comprises:
receiving, by the DPU, the first packet from the host through a serial computer bus or a network port.

5. The method according to any one of claims 1 to 4, wherein the firmware of the DPU comprises a second static microcode program; and
after executing, by the DPU, the first static microcode program, the method further comprises:
receiving, by the DPU, a second packet from the host, wherein the second packet carries second indication information, a parameter required for executing the target microcode program, and the logical address;
executing, by the DPU, the second static microcode program in response to the second indication information, wherein the second static microcode program is used to: obtain the microcode data based on the logical address, and determine an execution result based on the microcode data and the parameter; and
returning, by the DPU, the execution result to the host.

6. The method according to claim 5, wherein the DPU stores an association relationship between the second indication information and the second static microcode program.

7. The method according to claim 5 or 6, wherein the firmware of the DPU comprises a third static microcode program; and
the method further comprises:
receiving, by the DPU, a third packet from the host, wherein the third packet carries third indication information and a user identifier of the target microcode program;
executing, by the DPU, the third static microcode program in response to the third indication information, wherein the third static microcode program is used to register a function identifier based on the user identifier of the target microcode program; and
returning, by the DPU, the function identifier to the host, wherein
the second packet further carries the function identifier, and the second static microcode program is used to: generate a function pointer based on the function identifier and the logical address, and obtain the microcode data based on the function pointer.

8. The method according to claim 7, wherein the DPU stores an association relationship between the third indication information and the third static microcode program.

9. A microcode program offloading method, wherein the method is applied to a host, the host is connected to a data processing unit DPU, and the host comprises a first interface; and the method comprises:
obtaining, by the host, an offloading request triggered by a user through the first interface, wherein the offloading request carries a user identifier of a target microcode program and a program body of the target microcode program;
obtaining, by the host based on the user identifier of the target microcode program, a logical address allocated to the target microcode program; and
sending, by the host, a first packet to the DPU, wherein the first packet carries first indication information, microcode data, and the logical address, and the microcode data is data obtained by compiling the program body of the target microcode program, wherein
the first indication information indicates the DPU to execute a first static microcode program, and the first static microcode program is used to: translate the logical address into a physical address, and offload the microcode data to a storage location corresponding to the physical address.

10. The method according to claim 9, wherein the host further comprises a second interface; and the method further comprises:
obtaining, by the host, a calling request triggered by the user through the second interface, wherein the calling request carries the user identifier of the target microcode program and a parameter required for executing the target microcode program;
determining, by the host based on the user identifier of the target microcode program, the logical address allocated to the target microcode program;
sending, by the host, a second packet to the DPU, wherein the second packet carries second indication information, the parameter, and the logical address, the second indication information indicates the DPU to execute a second static microcode program, and the second static microcode program is used to: obtain the microcode data based on the logical address, and determine an execution result based on the microcode data and the parameter; and
receiving, by the host, the execution result returned by the DPU.

11. The method according to claim 10, wherein the host further comprises a third interface; and the method further comprises:
obtaining, by the host, a registration request triggered by the user through the third interface, wherein the registration request carries the user identifier of the target microcode program and a size of the target microcode program; and
allocating, by the host, the logical address to the target microcode program based on the size of the target microcode program, and establishing an association relationship between the user identifier and the logical address of the target microcode program.

12. The method according to claim 11, wherein the method further comprises:
sending, by the host, a third packet to the DPU, wherein the third packet carries third indication information and the user identifier of the target microcode program, the third indication information indicates the DPU to execute a third static microcode program, and the third static microcode program is used to register a function identifier based on the user identifier of the target microcode program; and
receiving, by the host, the function identifier returned by the DPU, wherein
the second packet carries the function identifier.

13. A microcode program offloading apparatus, wherein the apparatus is used in a data processing unit DPU, firmware of the DPU comprises a first static microcode program, and the apparatus comprises:
a first receiving module, configured to receive a first packet from a host, wherein the first packet carries first indication information, microcode data, and a logical address of the microcode data in the DPU, and the microcode data is data obtained by compiling a program body of a to-be-offloaded target microcode program; and
a first execution module, configured to execute the first static microcode program in response to the first indication information, wherein the first static microcode program is used to: translate the logical address into a physical address, and offload the microcode data to a storage location corresponding to the physical address.

14. The apparatus according to claim 13, wherein the DPU stores an association relationship between the first indication information and the first static microcode program.

15. The apparatus according to claim 13 or 14, wherein the DPU stores an address translation rule, and the address translation rule indicates a mapping relationship between a logical address and a physical address; and
the first static microcode program is used to translate the logical address into the physical address according to the address translation rule.

16. The apparatus according to any one of claims 13 to 15, wherein the first receiving module is configured to:
receive the first packet from the host through a serial computer bus or a network port.

17. The apparatus according to any one of claims 13 to 16, wherein the firmware of the DPU comprises a second static microcode program; and
the apparatus further comprises:
a second receiving module, configured to receive a second packet from the host, wherein the second packet carries second indication information, a parameter required for executing the target microcode program, and the logical address;
a second execution module, configured to execute the second static microcode program in response to the second indication information, wherein the second static microcode program is used to: obtain the microcode data based on the logical address, and determine an execution result based on the microcode data and the parameter; and
a first sending module, configured to return the execution result to the host.

18. The apparatus according to claim 17, wherein the DPU stores an association relationship between the second indication information and the second static microcode program.

19. The apparatus according to claim 17 or 18, wherein the firmware of the DPU comprises a third static microcode program; and
the apparatus further comprises:
a third receiving module, configured to receive a third packet from the host, wherein the third packet carries third indication information and a user identifier of the target microcode program;
a third execution module, configured to execute the third static microcode program in response to the third indication information, wherein the third static microcode program is used to register a function identifier based on the user identifier of the target microcode program; and
a second sending module, configured to return the function identifier to the host, wherein
the second packet further carries the function identifier, and the second static microcode program is used to: generate a function pointer based on the function identifier and the logical address, and obtain the microcode data based on the function pointer.

20. The apparatus according to claim 19, wherein the DPU stores an association relationship between the third indication information and the third static microcode program.

21. A microcode program offloading apparatus, wherein the apparatus is used in a host, the host is connected to a data processing unit DPU, and the host comprises a first interface; and the apparatus comprises:
a first obtaining module, configured to obtain an offloading request triggered by a user through the first interface, wherein the offloading request carries a user identifier of a target microcode program and a program body of the target microcode program;
a second obtaining module, configured to obtain, based on the user identifier of the target microcode program, a logical address allocated to the target microcode program; and
a first sending module, configured to send a first packet to the DPU, wherein the first packet carries first indication information, microcode data, and the logical address, and the microcode data is data obtained by compiling the program body of the target microcode program, wherein
the first indication information indicates the DPU to execute a first static microcode program, and the first static microcode program is used to: translate the logical address into a physical address, and offload the microcode data to a storage location corresponding to the physical address.

22. The apparatus according to claim 21, wherein the host further comprises a second interface; and the apparatus further comprises:
a third obtaining module, configured to obtain a calling request triggered by the user through the second interface, wherein the calling request carries the user identifier of the target microcode program and a parameter required for executing the target microcode program;
a determining module, configured to determine, based on the user identifier of the target microcode program, the logical address allocated to the target microcode program;
a second sending module, configured to send a second packet to the DPU, wherein the second packet carries second indication information, the parameter, and the logical address, the second indication information indicates the DPU to execute a second static microcode program, and the second static microcode program is used to: obtain the microcode data based on the logical address, and determine an execution result based on the microcode data and the parameter; and
a first receiving module, configured to receive the execution result returned by the DPU.

23. The apparatus according to claim 22, wherein the host further comprises a third interface; and the apparatus further comprises:
a fourth obtaining module, configured to obtain a registration request triggered by the user through the third interface, wherein the registration request carries the user identifier of the target microcode program and a size of the target microcode program; and
an allocation module, configured to: allocate the logical address to the target microcode program based on the size of the target microcode program, and establish an association relationship between the user identifier and the logical address of the target microcode program.

24. The apparatus according to claim 23, wherein the apparatus further comprises:
a third sending module, configured to send a third packet to the DPU, wherein the third packet carries third indication information and the user identifier of the target microcode program, the third indication information indicates the DPU to execute a third static microcode program, and the third static microcode program is used to register a function identifier based on the user identifier of the target microcode program; and
a second receiving module, configured to receive the function identifier returned by the DPU, wherein
the second packet carries the function identifier.

25. A data processing unit DPU, wherein the DPU comprises a memory and a processor;
the memory is configured to: store a program that supports the DPU to perform the method according to any one of claims 1 to 8, and store data for implementing the method according to any one of claims 1 to 8; and
the processor is configured to execute the program stored in the memory.

26. A host, wherein the host comprises a memory and a processor;
the memory is configured to: store a program that supports the host to perform the method according to any one of claims 9 to 12, and store data for implementing the method according to any one of claims 9 to 12; and
the processor is configured to execute the program stored in the memory.

27. A computer-readable storage medium, wherein the computer-readable storage medium stores instructions, and when the instructions are run on a computer, the computer is enabled to perform the method according to any one of claims 1 to 8 or the computer is enabled to perform the method according to any one of claims 9 to 12.
